# EUROPÄISCHE PATENTSCHRIFT

(11) **EP 1 719 572 B1**
(45) Veröffentlichungstag und Bekanntmachung des Hinweises auf die Patenterteilung: **23.02.2011**
(21) Anmeldenummer: 06007095.0
(22) Anmeldetag: 04.04.2006
(51) Int. Cl.: B23K 33/00, B23K 26/32, B23K 15/00, B23K 103/18, B23K 103/04, B23K 103/06

(54) **Verfahren zum Verschweißen eines Tellerrads mit einem Ausgleichsgehäuse eines Getriebes**
Process for welding a ring gear with gear case
Procédé pour souder une couronne avec une boîte d'engrenage

(30) Priorität: 04.05.2005 DE 102005021359; 20.05.2005 DE 102005023230
(43) Veröffentlichungstag der Anmeldung: 08.11.2006
(73) Patentinhaber: Bayerische Motoren Werke Aktiengesellschaft, 80809 München (DE)
(72) Erfinder: Aigner, Johann, 94081 Fürstenzell (DE); Angerer, Tim, Dr., 81249 München (DE); Kergel, Robert, 94365 Parkstetten (DE); Katzlinger, Peter, 85540 Haar (DE)

(56) Entgegenhaltungen:
- EP-B1- 1 087 855
- DE-A1- 10 013 430
- DE-C1- 10 013 429
- DE-T2- 69 510 712

## Beschreibung

Die vorliegende Erfindung betrifft ein Verfahren zum Verschweißen eines Tellerrads mit einem Ausgleichsgehäuse eines Getriebes gemäß dem Oberbegriff des Patentanspruches 1. Ein derartiges Verfahren ist aus der EP 1 087 855 B1 bekannt.

Die Verbindung von Tellerrad und Ausgleichsgehäuse im Achsgetriebe eines Fahrzeugs stellt eine hochbelastete Bauteilverbindung dar. Das Tellerrad besteht üblicherweise aus einsatzgehärtetem Stahl, das Ausgleichsgehäuse aus Grauguss. Aufgrund der hohen Kohlenstoffgehalte ist ein Verschweißen der beiden Bauteile nicht ganz unproblematisch. Bislang wurden das Tellerrad und das Ausgleichsgehäuse daher üblicherweise miteinander verschraubt.

Durch den Einsatz der Lasertechnologie ist es nun möglich, die Schraubverbindung durch Laserstrahlschweißen zu ersetzen, was z.B. in der bereits erwähnten EP 1 087 855 B1 beschrieben ist. Durch die stark gebündelte Energie des Laserstrahls werden die Fügeflächen der beiden Bauteile nur bis in eine relativ geringe Tiefe aufgeschmolzen, was den Vorteil hat, dass nur relativ wenig Kohlenstoff in die Schweißnaht einlegiert wird. Um eine möglichst hohe Schweißnahtgüte zu erzielen wird bei Schweißverfahren, wie sie in der EP 1 087 855 B1 oder der DE 695 10 712 T2 beschriebenen sind, ein nickelhaltiger Zusatzwerkstoff verwendet. Der Zusatzwerkstoff bewirkt, dass spröde Gefügebestandteile in der erstarrenden Schweißnaht gepuffert werden, was wiederum eine Rissbildung vorgebeugt.

Bei dem in der EP 1 087 855 B1 beschriebenen Verfahren werden das Tellerrad und das Ausgleichsgehäuse vor dem Verschweißen an den miteinander zu verschweißenden Flächen vorbearbeitet. Die miteinander zu verschweißenden Flächen werden dabei abgetragen, so dass nach dem Fügen des Tellerrads und des Ausgleichsgehäuses eine schmale U-, Y- oder V-Naht entsteht. Hierbei wird die Einsatzhärteschicht am Tellerrad zumindest teilweise abgetragen und somit der Kohlenstoffgehalt an der Fügestelle stark reduziert. Nach dem Fügen der Bauteile werden diese mittels eines Laserstrahls unter Zufuhr eines nickelhaltigen, austenitischen Drahtes verschweißt. Der Querschnitt der dabei entstehenden Schweißnaht entspricht im Wesentlichen dem Querschnitt der Nut. Da bei dem in der EP 1 087 855 B1 beschriebenen Verfahren beide Flanschflächen vor dem Verschweißen vorbearbeitet werden, entsteht ein relativ großer Fertigungsaufwand. Vor allem die spanabhebende Bearbeitung des Tellerradflansches ist aufgrund der vorangegangenen Einsatzhärtung des Tellerrads mit hohen Zerspanungskosten verbunden. Ferner stellt die Schweißnaht lediglich eine Einschweißung dar, da kein die Naht begrenzender Einstich vorhanden ist. Bei einer Verschmutzung der Fügeflächen, z.B. durch Öl, führt dies zu einem Ausgasen und damit zu einer Porenbildung und Schweißspritzern. Wenn der aus Zusatzwerkstoff hergestellte Draht nicht mit exakt konstanter Geschwindigkeit zugeführt wird, ist auch die in die Schweißnaht eingebrachte Materialmenge nicht konstant. Bei einer Einschweißung können somit lokale Schweißnahtüberhöhungen entstehen, was unerwünscht ist.

Aus der DE 100 13 430 A1 und der DE 100 13 429 C1 ist ein Verfahren bekannt, bei dem weder der Tellerradflansch noch der Ausgleichsgehäuseflansch in besonderer Weise für das Schweißen vorbereitet werden. Keiner der beiden Flansche wird spanabhebend vorbearbeitet. Um ein Verschweißen der beiden Bauteile zu ermöglichen, wird vor dem Fügen ein ca. 0,1 - 0,3 mm dicker Metallring aus Zusatzwerkstoff zwischen den Tellerradflansch und den Ausgleichsgehäuseflansch eingelegt. Der Metallring deckt dabei die gesamte Fläche der späteren Schweißnaht ab. Da der Innendurchmesser des Metallrings etwas größer als der Umfang des Telleradsitzes ist, verbleibt unterhalb des Metallrings ein Spalt, was das zentrische Fügen des Metallrings auf den Ausgleichsgehäuseflansch und somit eine Prozessautomatisierung aufwändig macht.

Aufgabe der Erfindung ist es, ein Verfahren zum Verschweißen eines Tellerrads mit einem Ausgleichsgehäuse eines Getriebes anzugeben, das prozesssicher durchführbar ist und mit dem eine Schweißnaht hoher Güte herstellbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Verfahren zum Verschweißen eines Tellerrads mit einem Ausgleichsgehäuse eines Getriebes aus, wobei in einem ersten Schritt ein Tellerrad aus einem Einsatzstahl hergestellt wird. Das Tellerrad weist einen Tellerradflansch mit einer Flanschfläche auf, die im Wesentlichen eben sein kann. Anschließend wird das Tellerrad einsatzgehärtet. Ferner wird ein Ausgleichsgehäuse hergestellt. Das Ausgleichsgehäuse wird aus einem Gusseisenmaterial, z.B. Grauguss, gegossen. Das Ausgleichsgehäuse weist eine Anlageschulter auf, die zur Verbindung des Ausgleichsgehäuses mit dem Tellerrad vorgesehen ist. Die Anlageschulter des Ausgleichsgehäuses wird drehbearbeitet, wodurch ein "Ausgleichsgehäuseflansch" entsteht. In einem nächsten Schritt wird das Tellerrad auf das Ausgleichsgehäuse aufgepresst, so dass die Flanschfläche des Tellerrads an dem Ausgleichsgehäuseflansch anliegt. Danach werden der Tellerradflansch und der Ausgleichsgehäuseflansch mittels eines Hochenergiestrahls, z.B. mittels eines Laserstrahls bzw. eines Elektronenstrahls, miteinander verschweißt. Während des Schweißvorgangs wird der Schweißzone ein Zusatzwerkstoff zugeführt, bei dem es sich z.B. um einen nickelhaltigen Zusatzwerkstoff handeln kann.

Der Kern der Erfindung besteht in der "Schweißvorbereitung" des Ausgleichsgehäuseflansches. Der Ausgleichsgehäuseflansch weist einen sich in einer Umfangsrichtung des Ausgleichsgehäuseflansches erstreckenden Steg auf, dessen Stirnseite nach dem Fügen der beiden Bauteile an der Flanschfläche des Tellerrads anliegt. In axialer Richtung des Tellerrads gesehen, steht der Steg von dem Ausgleichsgehäuseflansch ab. Die Stirnseite des Stegs bildet eine Berührfläche mit dem Tellerradflansch. In einem Bereich radial außerhalb des Stegs weist der Ausgleichsgehäuseflansch eine Flanschfläche auf, die von der Stirnseite des Stegs aus gesehen etwas zurückversetzt ist. Nach dem Fügen der beiden Bauteile bildet diese radial äußere Flanschfläche des Ausgleichsgehäuseflanschs mit der Flanschfläche des Tellerrads einen ersten Spalt bzw. eine erste "Nut", die beim Schweißen mit aufgeschmolzenem Zusatzwerkstoff aufgefüllt wird. Der erste Spalt kann den Querschnitt eines "halben U, Y oder V" haben. Die Querschnittsform wird dabei durch die Art der Drehbearbeitung des Ausgleichsgehäusesflansches bestimmt.

Radial innerhalb des Stegs weist der Ausgleichsgehäuseflansch eine sich in Umfangsrichtung des Ausgleichsgehäuseflansches erstreckende Ausnehmung auf, die nach dem Fügen der beiden Bauteile einen zweiten Spalt mit der Flanschfläche des Tellerrads bildet. Diese Ausnehmung kann beispielsweise als umlaufender "Einstich" ausgebildet sein. Der Steg wird dabei durchgeschweißt. Durch einen derartigen Spalt "unterhalb" des Stegs wird eine definierte Einschweißtiefe erreicht. Der Einstich begrenzt also die Schweißnaht und verringert die Kerbwirkung in diesem Bereich. Durch den Einstich ergibt sich ferner eine "ruhigere" Schweißnahtoberfläche, da das überschüssige Zusatzmaterial in den Einstich abfließen kann und nicht zu lokalen Nahtüberhöhungen führt. Durch den Einstich kann auch der Schweißrauch, welcher beim Verbrennen evtl. Verunreinigungen während des Schweißprozesses entsteht, zumindest teilweise aufgenommen werden. Dies wiederum führt zu einer erheblichen Reduzierung der Gefahr von Poren und Auswürfen aus der Schmelze.

Vorzugsweise wird vor dem Verschweißen der beiden Bauteile lediglich der Ausgleichsgehäuseflansch vorbearbeitet, nicht aber der Tellerradflansch. Der Tellerradflansch braucht also nach dem Einsatzhärten keiner materialabtragenden Bearbeitung mehr unterzogen werden. Die Flanschfläche des Tellerradflansches kann im Bereich der Schweißzone eben bzw. ringförmig sein.

Der Ausgleichsgehäuseflansch kann in einem Bereich, der radial innerhalb der Ausnehmung liegt, eine weitere Flanschfläche aufweisen. Diese radial innere Flanschfläche kann wahlweise koplanar zur Stirnseite des Stegs sein und nach dem Fügen unmittelbar an der Flanschfläche des Tellerradflansches anliegen. Alternativ dazu kann diese radial innere Flanschfläche geringfügig zurückversetzt in Bezug auf die Stirnseite des Stegs sein, z.B. um 0,1 - 0,2 mm, und dementsprechend einen kleinen Spalt mit der Flanschfläche des Tellerradflansches bilden. Wenn die radial innere Flanschfläche des Ausgleichsgehäuseflansches etwas zurückversetzt ist, verbessert sich das Verzugsverhalten des Tellerrads während des Schweißens.

Durch das "Zurücksetzen" der radial inneren Flanschfläche des Ausgleichsgehäuseflansches wird das Tellerrad in diesem Bereich beim Schrumpfen der Schweißnaht in seiner Bewegung zum Anlageflansch hin nicht behindert. Ohne ein "Zurücksetzen" der Flanschfläche könnte beim Schrumpfen der Schweißnaht eine gewisse Hebelwirkung um den Anlagepunkt unterhalb der Schweißnaht entstehen, was die Gefahr eines Verzugs des Tellerrads zur Folge haben könnte.

Um das Einlaufverhalten der Tellerradverzahnung und des damit kämmenden Antriebsritzels zu verbessern wird das Tellerrad nach dem Einsatzhärten vorzugsweise phosphatiert, d.h. mit einer Bonderschicht überzogen. Wenngleich die Phosphatschicht primär im Bereich der Tellerradverzahnung von Vorteil ist, muss aus fertigungstechnischen Gründen das gesamte Tellerrad in ein entsprechendes Tauchbad getaucht werden.

Wie bereits erwähnt, wird gemäß der Erfindung lediglich der Flansch des Ausgleichsgehäuses für die Schweißung vorbearbeitet. Der Tellerradflansch hingegen bleibt "unbehandelt". Die gehärtete und gebonderte bzw. phosphatierte Oberflächenschicht des Tellerrads muss also nicht abgetragen werden, was Fertigungskosten spart.

Im Folgenden wird die Erfindung im Zusammenhang mit der Zeichnung näher erläutert. Es zeigen:
- Figur 1: Ein erstes Ausführungsbeispiel; und
- Figur 2: ein zweites Ausführungsbeispiel gemäß der Erfindung.

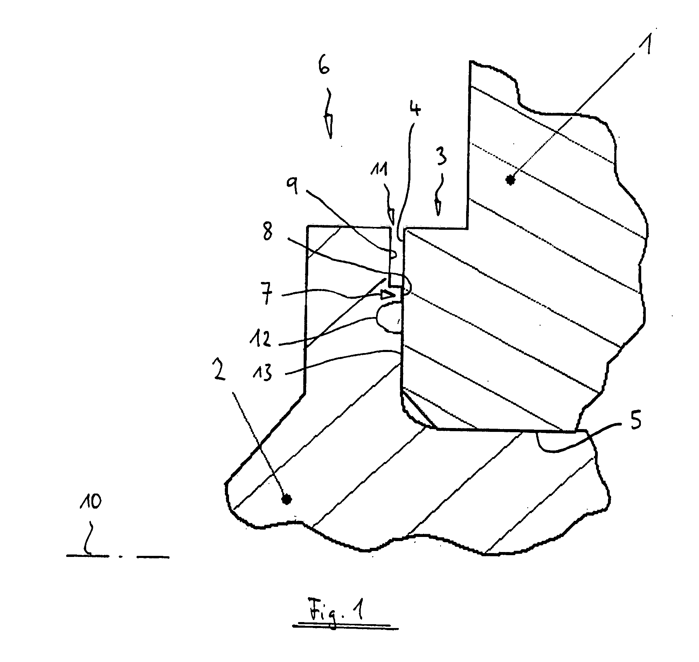

Figur 1 zeigt einen Teilquerschnitt durch ein Tellerrad 1, das auf ein Ausgleichsgehäuse 2 aufgepresst ist. Das Tellerrad 1 weist einen Tellerradflansch 3 mit einer im Wesentlichen ebenen Flanschfläche 4 auf. Eine radiale Innenseite 5 des Tellerrads ist auf das Ausgleichsgehäuse 2 aufgepresst.

Das Ausgleichsgehäuse 2 weist eine Flanschschulter 6 auf, die wiederum mehrere Bereiche aufweist. In einem Mittelbereich der Flanschschulter 6 ist ein Steg 7 vorgesehen, dessen Stirnseite 8 unmittelbar an der Flanschfläche 4 des Tellerradflansches 3 anliegt. Radial außerhalb des Stegs 7 weist der Ausgleichsgehäuseflansch 6 eine Flanschfläche 9 auf, die in Axialrichtung 10, d.h. in Richtung der Drehachse des Tellerrads 1 gesehen, in Bezug auf die Stirnseite 8 des Stegs 7 zurückversetzt ist. Die Flanschfläche 9 der Flanschschulter 6, die Flanschfläche 4 des Tellerradflansches 3 und die radiale Außenfläche des Stegs 7 bilden einen Spalt bzw. eine Nut 11, die bei dem hier gezeigten Ausführungsbeispiel "U-förmig" ist.

Radial innerhalb des Stegs 7 weist die Flanschschulter 6 einen Einstich 12 auf, der, wie die Flanschfläche 9 durch eine Drehbearbeitung der Flanschschulter 6 hergestellt werden kann. Noch weiter radial innerhalb, d.h. radial innerhalb des Einstichs 12, weist die Flanschschulter 6 eine weitere Flanschfläche 13 auf, die bei dem hier gezeigten Ausführungsbeispiel koplanar zur Stirnseite 8 des Stegs 7 ist und somit ebenfalls an der Flanschfläche 4 des Tellerradflansches 3 anliegt.

Das Tellerrad 1 kann beispielsweise aus einem Einsatzstahl hergestellt sein. Nach dem Einsatzhärten wird das Tellerrad 1 in ein phosphathaltiges Bad bzw. ein Bonderbad eingetaucht. Dabei wird die gesamte Oberfläche des Tellerrads 1 mit einer Phosphat- bzw. Bonderschicht überzogen. Anschließend werden das Tellerrad 1 und das Ausgleichsgehäuse 2 gefügt (vgl. Figur 1). In einem weiteren Schritt werden die Flanschschulter 6 und der Tellerradflansch 3 radial von außen her, z.B. mittels eines Laserstrahls oder eines Elektronenstrahls, miteinander verschweißt. Zur Verbesserung der Schweißnahtqualität wird der Schweißzone, d.h. dem Spalt 11 während des Schweißvorgangs ein nickelhaltiger Zusatzwerkstoff zugeführt.

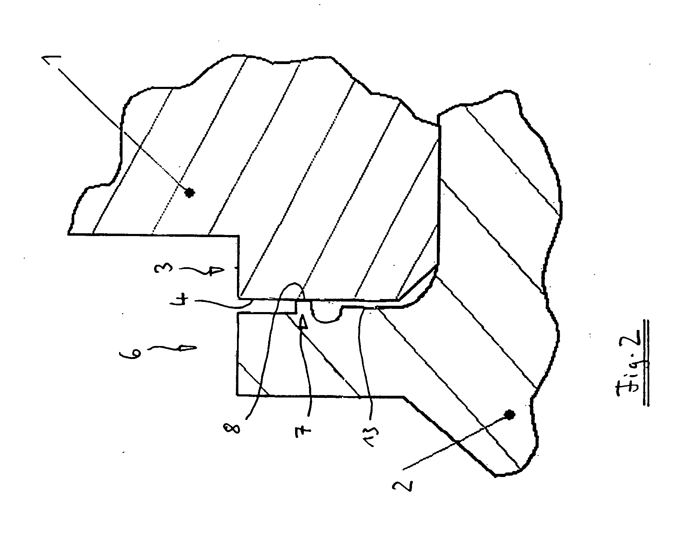

Figur 2 zeigt ein Ausführungsbeispiel, bei dem die radialinnere Flanschfläche 13 der Flanschschulter 6 in Bezug auf die Stirnseite 8 des Stegs 7 geringfügig abgedreht, d.h. "nach hinten" von der Flanschfläche 4 des Tellerradflansches 3 weg versetzt ist. "Geringfügig" bedeutet in diesem Zusammenhang z.B. 0,1 - 0,2 mm. Dadurch ergibt sich zwischen der radialinneren Flanschfläche 13 der Flanschschulter 6 und der Flanschfläche 4 des Tellerradflansches 3 ein weiterer kleiner Spalt.

## Patentansprüche

1. Verfahren zum Verschweißen eines Tellerrads (1) mit einem Ausgleichsgehäuse (2) eines Getriebes, mit folgenden Schritten:
- Herstellen eines Tellerrads (1), wobei das Tellerrad (1) einen Tellerradflansch (3) mit einer Flanschfläche (4) aufweist,
- Einsatzhärten des Tellerrads (1),
- Gießen eines Ausgleichsgehäuses (2) aus einem Gusseisenmaterial, wobei das Ausgleichsgehäuse (2) eine Flanschschulter (6) aufweist,
- Herstellen eines Ausgleichsgehäuseflansches durch Drehbearbeiten der Flanschschulter (6),
- Fügen des Tellerrads (1) und des Ausgleichsgehäuses (2), wobei das Tellerrad (1) mit seiner Flanschfläche (4) gegen die Flanschschulter (6) gedrückt wird,
- Verschweißen des Tellerradflansches (3) mit der Flanschschulter (6) mittels eines Hochenergiestrahls, wobei während des Schweißvorgangs der Schweißzone (11) ein Schweißzusatzwerkstoff zugeführt wird,
**dadurch gekennzeichnet, dass** die Flanschschulter (6) folgende Flanschbereiche aufweist:
- einen sich einer Umfangsrichtung der Flanschschulter erstreckenden Steg (7), dessen Stirnseite (8) nach dem Fügen an der Flanschfläche (4) des Telleradflansches (3) anliegt,
- eine radial außerhalb des Stegs befindliche Flanschfläche (9), die von der Stirnseite (8) des Stegs (7) aus gesehen hinter der Stirnseite (8) des Stegs (7) liegt und die nach dem Fügen mit der Flanschfläche (4) des Tellerradflansches (3) einen ersten Spalt (11) bildet, und
- eine radial innerhalb des Stegs (7) befindliche, sich in Umfangsrichtung der Flanschschulter (6) erstreckende Ausnehmung (12), die nach dem Fügen einen zweiten Spalt mit der Flanschfläche (4) des Tellerradflansches (3) bildet.

2. Verfahren nach Anspruch 1,
**dadurch gekennzeichnet, dass** der Tellerradflansch (3) nach dem Einsatzhärten keiner materialabtragenden Bearbeitung unterzogen wird.

3. Verfahren nach Anspruch 1 oder 2,
**dadurch gekennzeichnet, dass** die Flanschfläche (4) des Tellerradflansches (3) zumindest im Bereich der Schweißzone (11) eben ist.

4. Verfahren nach einem der Ansprüche 1 bis 3,
**dadurch gekennzeichnet, dass** die radial außerhalb des Stegs (7) befindliche Flanschfläche (9) der Flanschschulter (6) so ausgebildet ist, dass sie mit der Flanschfläche (4) des Tellerradflansches (3) und einer radialen Außenfläche des Stegs (7) eine halbe U-Nut bildet.

5. Verfahren nach einem der Ansprüche 1 bis 3,
**dadurch gekennzeichnet, dass** die radial außerhalb des Stegs (7) befindliche Flanschfläche (9) der Flanschschulter (6) so ausgebildet ist, dass sie mit der Flanschfläche (4) des Tellerradflansches (3) und einer radialen Außenfläche des Stegs (7) eine halbe V-Nut bildet.

6. Verfahren nach einem der Ansprüche 1 bis 3,
**dadurch gekennzeichnet, dass** die radial außerhalb des Stegs (7) befindliche Flanschfläche (9) der Flanschschulter (6) so ausgebildet ist, dass sie mit der Flanschfläche (4) des Tellerradflansches (3) und einer radialen Außenfläche des Stegs (7) eine halbe Y-Nut bildet.

7. Verfahren nach einem der Ansprüche bis 1 bis 6,
**dadurch gekennzeichnet, dass** die Flanschschulter (6) radial innerhalb der sich in Umfangsrichtung erstreckenden Ausnehmung (12) eine Flanschfläche (13) aufweist, die in Bezug auf die Stirnseite (8) des Stegs (7) parallel versetzt ist und die nach dem Fügen einen Abstand von der Flanschfläche (4) des Tellerradflansches (3) aufweist.

8. Verfahren nach einem der Ansprüche 1 bis 7,
**dadurch gekennzeichnet, dass** das Tellerrad (1) nach dem Einsatzhärten mit einer Phosphat- oder Bonderschicht überzogen wird.

## Claims

1. A method for welding a ring gear (1) to a differential case (2) with a gearing, comprising the following steps:
- producing a ring gear (1), the ring gear (1) having a ring gear flange (3) with a flange face (4),
- case-hardening the ring gear (1),
- casting a differential case (2) from a cast iron material, the differential case (2) having a flange shoulder (6),
- producing a differential case flange by rotary machining of the flange shoulder (6),
- joining the ring gear (1) and the differential case (2), the ring gear (1) being pressed with its flange face (4) against the flange shoulder (6),
- welding the ring gear flange (3) to the flange shoulder (6) by means of a high-energy beam, an additional welding material being supplied to the welding zone (11) during the welding process,
**characterised in that** the flange shoulder (6) has the following flange regions:
- a web (7) which extends in the peripheral direction of the flange shoulder and the end face of which, after joining, rests on the flange face (4) of the ring gear flange (3),
- a flange face (9) which is located radially outside the web and, viewed from the end face (8) of the web (7), is located behind the end face (8) of the web (7) and which, after joining to the flange face (4) of the ring gear flange (3), forms a first gap (11), and
- a recess (12), which is located radially inside the web (7), extends in the peripheral direction of the flange shoulder (6) and after joining, forms a second gap with the flange face (4) of the ring gear flange (3).

2. A method according to claim 1, **characterised in that** the ring gear flange (3), after the case-hardening, is not subjected to any material-removing machining.

3. A method according to claim 1 or 2, **characterised in that** the flange face (4) of the ring gear flange (3) is flat, at least in the region of the welding zone (11).

4. A method according to any one of claims 1 to 3, **characterised in that** the flange face (9), located radially outside the web (7), of the flange shoulder (6) is configured in such a way that it forms half a U-groove with the flange face (4) of the ring gear flange (3) and a radial outer face of the web (7).

5. A method according to any one of claims 1 to 3, **characterised in that** the flange face (9), located radially outside the web (7), of the flange shoulder (6) is configured in such a way that it forms half a V-groove with the flange face (4) of the ring gear flange (3) and a radial outer face of the web (7).

6. A method according to any one of claims 1 to 3, **characterised in that** the flange face (9), located radially outside the web (7), of the flange shoulder (6) is configured in such a way that it forms half a Y-groove with the flange face (4) of the ring gear flange (3) and a radial outer face of the web (7).

7. A method according to any one of claims 1 to 6, **characterised in that** the flange shoulder (6), radially inside the recess (12) extending in the peripheral direction, has a flange face (13), which, in relation to the end face (8) of the web (7), is offset in parallel and, after joining, has a spacing from the flange face (4) of the ring gear flange (3).

8. A method according to any one of claims 1 to 7, **characterised in that** the ring gear (1), after case-hardening, is covered with a phosphate or bonder layer.

## Revendications

1. Procédé pour souder une couronne de différentiel (1) à un boîtier de différentiel (2) d'une transmission comprenant les étapes suivantes :
- réaliser une couronne de différentiel (1), ayant une bride (3) avec une surface de bride (4),
- cémenter la couronne de différentiel (1),
- couler un boîtier de différentiel (2) en une fonte de fer, le boîtier de différentiel (2) ayant un épaulement de bride (6),
- façonner une bride de boîtier de différentiel par façonnage au tour, de l'épaulement de bride (6),
- assembler la couronne de différentiel (1) et le boîtier de différentiel (2), la couronne de différentiel (1) étant poussée par sa surface de bride (4) contre l'épaulement de bride (6),
- souder la bride (3) de la couronne de différentiel à l'épaulement de bride (6) à l'aide d'un faisceau à forte énergie, et pendant l'opération de soudage, fournir un matériau d'apport de soudage à la zone de soudage (11),
procédé **caractérisé en ce que**
- l'épaulement de bride (6) présente des zones d'épaulement suivantes,
- une nervure (7) qui s'étend dans la direction périphérique de l'épaulement de bride et dont la face frontale (8), après assemblage, est appliquée contre la surface (4) de la bride (3) de la couronne de différentiel,
- une surface de bride (9) qui se trouve radialement au-delà de la nervure, derrière la face frontale (8) de la nervure (7) lorsqu'on regarde à partir de la face frontale (8) de la nervure (7) et qui, après assemblage, forme un premier intervalle (11) avec la surface (4) de la bride (3) de la couronne de différentiel, et
- une cavité (12) radialement à l'intérieur de la nervure (7) et s'étendant dans la direction périphérique de l'épaulement de bride (6), et après assemblage, cette cavité forme un second intervalle avec la surface (4) de la bride (3) de la couronne de différentiel.

2. Procédé selon la revendication 1,
**caractérisé en ce que**
après la cémentation, la bride (3) de la couronne de différentiel n'est soumise à aucun usinage avec enlèvement de matière.

3. Procédé selon la revendication 1 ou 2,
**caractérisé en ce que**
la surface (4) de la bride (3) de la couronne de différentiel est plane au moins dans la zone de soudage (11).

4. Procédé selon l'une des revendications 1 à 3,
**caractérisé en ce que**
la surface (9) de l'épaulement de bride (6) radialement à l'extérieur de la nervure (7), est réalisée pour former une demi-rainure en U avec la surface (4) de la bride (3) de la couronne de différentiel et la surface radiale extérieure de la nervure (7).

5. Procédé selon l'une des revendications 1 à 3,
**caractérisé en ce que**
la surface (9) de l'épaulement de bride (6) radialement à l'extérieur de la nervure (7), est réalisée pour former une demi-rainure en V avec la surface (4) de la bride (3) de la couronne de différentiel et la surface radiale extérieure de la nervure (7).

6. Procédé selon l'une des revendications 1 à 3,
**caractérisé en ce que**
la surface (9) de l'épaulement de bride (6) radialement à l'extérieur de la nervure (7), est réalisée pour former une demi-rainure en Y avec la surface (4) de la bride (3) de la couronne de différentiel et la surface radiale extérieure de la nervure (7).

7. Procédé selon l'une des revendications 1 à 6,
**caractérisé en ce que**
l'épaulement de bride (6) possède radialement à l'intérieur de la cavité (12) qui s'étend dans la direction périphérique, une surface de bride (13) décalée parallèlement à la face frontale (8) de la nervure (7) et qui, après assemblage, reste distante de la surface (4) de la bride (3) de la couronne de différentiel.

8. Procédé selon l'une des revendications 1 à 7,
**caractérisé en ce qu'**
après cémentation, on revêt la couronne de différentiel (1) d'une couche de phosphate ou d'un agent de liaison.
